# EUROPEAN PATENT SPECIFICATION

(11) **EP 1 964 498 B1**
(45) Date of publication and mention of the grant of the patent: **29.06.2011**
(21) Application number: 08000754.5
(22) Date of filing: 16.01.2008
(51) Int. Cl.: A47J 42/08

(54) **Grinder**
Mühle
Broyeur

(30) Priority: 06.02.2007 CN 200720002323 U
(43) Date of publication of application: 03.09.2008
(73) Proprietor: Pai, Chung-Jen, Taipei Hsien (TW)
(72) Inventor: Pai, Chung-Jen, Taipei Hsien (TW)
(74) Representative: Strehl Schübel-Hopf & Partner

(56) References cited:
- FR-A- 2 857 842
- FR-A- 2 873 559
- US-A- 5 865 384

## Description

### BACKGROUND OF THE INVENTION

### Field of the Invention:

The present invention relates to grinders and more particularly, to such a grinder, which allows easy adjustment of the ground powder particle size.

### Description of the Related Art:

It is quite common to use powdered or grained spice such as pepper powder, curry powder, coffee beans, and etc. (herein generally referred to as spice) in the preparation of food or drinks. Powdered spice can easily solved in liquid or evenly distributed on the food.

There have been available spice grinders, which are of two types. That is, grains or pieces of spice are put into a grinder, which is manually or electrically operated to grind the grains or pieces into powder for direct sprinkling onto food or soup. These grinders are quite popular among users for the advantage of instant grinding. Taiwan Patent Nos. 367805 and 415215 (equivalent to US 5,865,384), issued to the present inventor, discloses a similar design. According to this design, the grinder comprises a housing, a spindle, a grinding device, a particle size adjusting device, and a driving device. This design is functional, however it still has drawbacks. Before putting the material to be ground into the housing, the user must remove the driving device from the housing. This operation manner is inconvenient. Therefore, an improvement is necessary.

Further, a conventional grinder has a ground power particle size adjusting device at the top or bottom side for allowing adjustment of the desired ground powder particle size. Because the ground power particle size adjusting device is spaced from the grinding device at a distance, it is not effective to adjust the desired ground powder particle size. In the aforesaid US 5,865,384, the ground powder particle size adjusting device is provided at the bottom center of the housing, comprising an annular base disk with a pair of wings, each wing extending from an opposite side of the base disk, the wings extending to a disk post at a center of the base disk, the disk post having a disk hole and two wing slots, a disk packing having two side wings being disposed in the disk hole, with the two side wings located in the wing slots, a screw rod of a knob being passed through the disk hole of the disk post to lock with a packing piece. When the knob is turned, the disk packing may displace upwardly and downwardly and further cause the spindle connected with the disk packing to also displace upwardly and downwardly for adjusting the clearance between the disk teeth and the grinding teeth. According to this bottom adjustment design, the annular base disk and the knob may easily be covered with the ground powder. Further, when a rotary cover is coupled to the bottom side of the housing, cleaning of the annular base disk and the knob becomes complicated.

### SUMMARY OF THE INVENTION

The present invention has been accomplished under the circumstances in view. It is therefore the main object of the present invention to provide a grinder, which allows adjustment of the ground powder particle size in an easy and convenient way.

To achieve this and other objects of the present invention, the grinder comprises a driving unit, the driving unit comprising a spindle; a hollow base mounted on a top side of the driving unit, the hollow base having a grinding chamber in which the spindle suspends, a ground powder outlet in communication with the grinding chamber, at least one inner thread extending around the grinding chamber, and a top engagement portion; a grinding device, the grinding device comprising a grinding disk and a grinding base, the grinding disk being affixed to the spindle and suspending in the grinding chamber and kept spaced from the grinding base by a gap; a container mounted on a top side of the hollow base, the container comprising a bottom opening, an annular bottom coupling flange extending around the bottom opening, an engagement portion extending from the annular bottom coupling flange for engaging the top engagement portion of the hollow base to prohibit rotation of the container relative to the hollow base, a hollow guide disk mounted therein and spaced above the bottom opening, an elastic member supported between the annular bottom coupling flange and the hollow guide disk, and a rotary cap rotatably coupled to the annular bottom coupling flange and fastened to the hollow guide disk, the rotary cap having a bottom side fixedly connected to the grinding base and at least one outer thread threaded into the at least one inner thread of the hollow base. When lifting the container to disengage the engagement portion of the annular bottom coupling flange from the top engagement portion of the hollow base, the elastic member is compressed by the annular bottom coupling flange against the hollow guide disk, and the rotary cap is rotatable with the container relative to the hollow base to adjust the gap between the grinding base and the grinding disk.

### BRIEF DESCRIPTION OF THE DRAWINGS

FIG. 1 is an exploded view of a grinder in accordance with the present invention.
FIG. 2 is a sectional assembly view of the grinder in accordance with the present invention.
FIG. 3 is a perspective view of the grinder in accordance with the present invention.
FIG. 4a is a sectional view of the present invention, showing the container lifted and disengaged from the base.
FIG. 4b is a sectional view of the present invention, showing the position of the container adjusted relative to the base.
FIG. 5a is a schematic exploded view of the present invention, showing the relationship between the bottom cover and the battery lid (I).
FIG. 5b is a schematic exploded view of the present invention, showing the relationship between the bottom cover and the battery lid (II).

### DETAILED DESCRIPTION OF THE PREFERRED EMBODIMENT

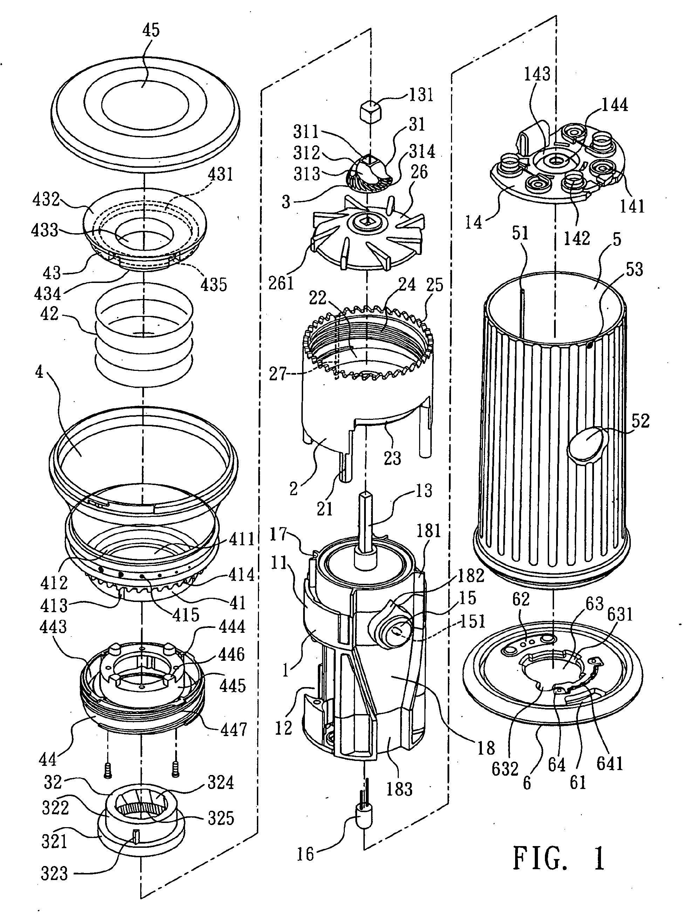

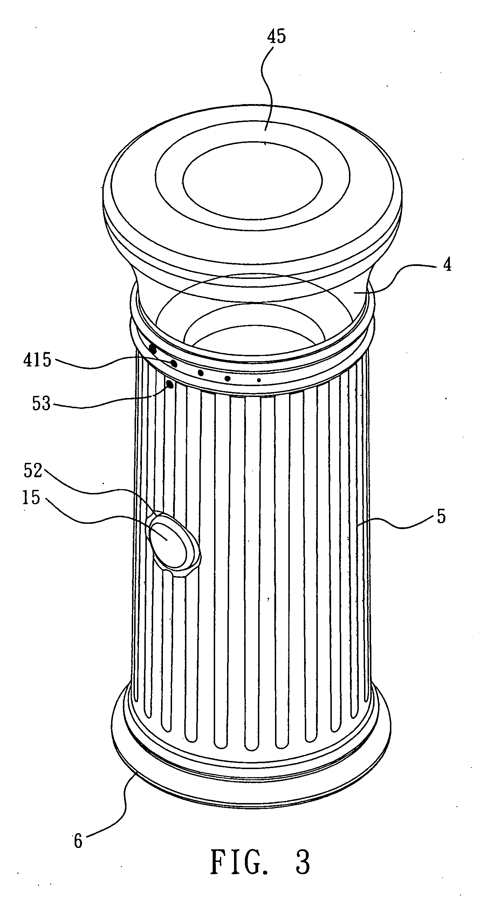

Referring to FIGS. 1~3, a grinder in accordance with the present invention is shown comprised of a driving unit **1,** a base **2,** a grinding device **3,** a container **4,** a housing **5,** and a bottom cover **6.**

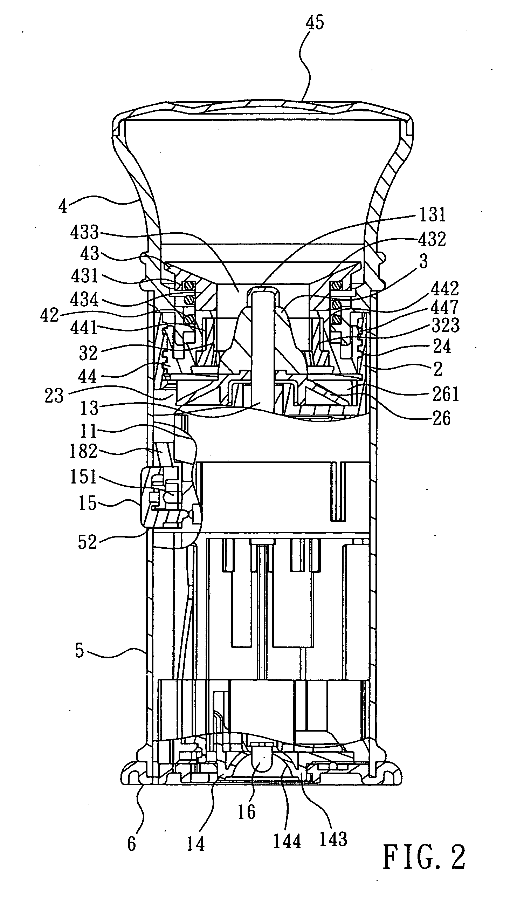

The driving unit **1** comprises a hollow shell **11,** which has a battery chamber **12** in its bottom side, a motor (not shown) mounted inside the hollow shell **11** electrically connected to the battery cells (not shown) in the battery chamber **12,** a speed reduction gear set (not shown) mounted inside the hollow shell **11** coupled to and rotatable by the motor, a spindle **13** coupled to one end, namely, the output end of the speed reduction gear set and axially extending out of the center of the top side of the hollow shell **11,** a battery lid **14,** which covers the bottom side of the battery chamber **12** and has a plurality of positive electrodes and negative electrodes alternatively and equiangularly arranged on its top side around the border and one positive pole contact **141** and one negative pole contact **142** exposed out of its bottom side and respectively electrically connected to one positive electrode and one negative electrode (see FIG. 2), a control switch **15** protruded from the periphery near the top, and an indicator light **151,** for example, LED (light emitting diode) installed in the control switch **15** for power on/off indication. When switched on the control switch **15,** the indicator light **151** is turned on, and the motor is started to rotate the speed reduction gear set and the spindle **13.**

The battery lid **14** has a bottom hub **143.** An illuminating light **16,** for example, LED (light emitting diode) is installed in the bottom hub **143** of the battery lid **14.** A smoothly arched reflector **144** is mounted inside the bottom hub **143** of the battery lid **14** around the illuminating light **16** for reflecting light from the illuminating light **16** toward the outside of the battery lid **14** for illumination when the user is holding or participating in a candlelight dinner or outdoor cooking at night.

The top side of the hollow shell **11** of the driving unit **1** is joined to the base **2,** having a plurality of longitudinal coupling grooves **17** spaced around the periphery for the connection of respective longitudinally extending bottom coupling rods **21** of the base **2.**

The base **2** is a top-open barrel fastened to the top side of the driving unit **1,** having a plurality of bottom coupling rods **21** respectively plugged into the longitudinal coupling grooves **17** of the hollow shell **11** of the driving unit **1** and then affixed thereto with fastening members, for example, screws, an inside grinding chamber **22,** which has a bottom center through hole (not shown) for the passing of the spindle **13,** a ground powder outlet **23** at one side for guiding out the ground powder. The hollow shell **11** of the driving unit **1** further has two ribs **181** protruded from the periphery and extending along the length, defining a discharge trough **18,** which is disposed in communication with the ground powder outlet **23** of the base **2** and has a bottom discharge opening **183** that has a width gradually reducing toward the bottom. The control switch **15** is located in the discharge trough **18.** A water-drop-like guide member **182** is mounted in the discharge trough **18** around the control switch **15** for guiding the discharging ground powder away from the control switch **15** when the discharging ground powder goes through the discharge trough **18.** The base **2** further has at least one inner thread **24,** preferably one thick inner thread and two fine inner threads for foolproof and directional installation, and an engagement portion **25.** As illustrated in FIG. 1, the engagement portion **25** is a one-way toothed ring.

Further, a conical distribution wheel **26** is affixed to the spindle **13** and suspending in the bottom side of the grinding chamber **22,** having a plurality of radial ribs **261.** After grinding of the loaded material into powder by the grinding device **3,** the conical distribution wheel **26** collects the ground powder from the grinding device **3** during its rotary motion with the spindle **13,** causing the radial ribs **261** to guide the ground powder out of the grinding chamber **22** of the base **2** through the ground powder outlet **23** toward the discharge trough **18.** When the ground powder falls out of the ground powder outlet **23** into the discharge trough **18,** it is discharged out of the discharge opening **183** due to the effect of gravity.

The grinding device **3** is comprised of a grinding disk **31** and a grinding base **32.** The grinding base **32** is provided at the top side of the grinding disk **31.** The grinding disk **31** is a conical disk having a center mounting hole **311** coupled to the spindle **13.** After insertion of the spindle **13** through the center mounting hole **311** of the grinding disk **31,** a cap **131** is capped on the top end of the spindle **13** to secure the grinding disk **31** firmly to the spindle **13.** Further, the grinding disk **31** has a plurality of spiral wings **312** equiangularly spaced around the center mounting hole **311,** a plurality of spiral grooves **313** equiangularly spaced around the center mounting hole **311** and separated from one another by the spiral wings **312** for guiding the loaded material, for example, spice outwardly downwards, and a plurality of ratchet teeth **314** arranged around the periphery for moving the loaded material relative to the grinding base **32.**

The grinding base **32** is a circular, stepped, hollow member fixedly fastened to the rotary cap **44** of the container **4,** having a bottom portion **321** of relatively greater outer diameter and a top body portion **322** of relatively smaller outer diameter. The top body portion **322** has a plurality of locating ribs **323** spaced around the periphery and fastened to the rotary cap **44** of the container **4** for synchronous rotation with the rotary cap **44,** a plurality of oblique guide ribs **324** spaced around the upper part of its inside wall, and a plurality of fine grinding teeth **325** spaced around the lower part of its inside wall. The inner diameter of the top body portion **322** of the grinding base **32** is slightly smaller than the outer diameter of the grinding disk **31** so that the grinding disk **31** is prohibited from entering the grinding base **32** and a gas is constantly kept between the grinding disk **31** and the grinding base **32.** When rotating the grinding disk **31,** the loaded grain or strip-like material falls to the spiral grooves **313** among the spiral wings **312** and is carried by the spiral wings **312** and the spiral grooves **313** toward gaps in between the ratchet teeth **314** and the grinding teeth **325** for grinding into powder different particle sizes. Fine particle size powder immediately falls out of the grinding device **3.** Powder having a particle size greater than the gap between of the grinding disk **31** and the grinding base **32** is continuously ground. According to the present preferred embodiment, the grinding disk **31** and the grinding base **32** are respectively made of acid-proof, wearing proof, anti-oxidation precision ceramics.

The container **4** is hollow, inverted cone mounted on the base **2** at the top. Preferably, the container **4** is transparent so that the user can visually check the amount of the loaded material to be ground. The container **4** has a bottom opening **411,** an annular bottom coupling flange **41** extending around the bottom opening **411,** and an annular step **412** protruded from its inside wall and extending around the bottom opening **411.** An elastic member **42,** for example, spring is supported on the annular step **412** inside the container **4.** A guide disk **43** is supported on the elastic member **42** inside the container **4.** The guide disk **43** has a top guide surface **432** curved inwards, a center opening **433** cut through the center of the inwardly curved top guide surface **432** for guiding the loaded material into the grinding device **3** for grinding, an annular bottom locating groove **431** for the positioning of the top end of the elastic member **42,** an annular coupling flange **434** downwardly extending from the bottom side between the center opening **433** and the annular bottom locating groove **431** and coupled to the rotary cap **44.** The rotary cap **44** has a bottom chamber **441,** which receives the grinding base **32,** a plurality of locating grooves **442** respectively forced into engagement with the locating ribs **323** of the grinding base **32** to secure the grinding base **32** to the bottom side of the rotary cap **44,** an annular top coupling flange **445** abutted against the annular coupling flange **434** of the guide disk **43,** an annular top coupling groove **443** extending around the annular top coupling flange **445** and coupled to the annular bottom coupling flange **41** of the container **4,** a plurality of pins **446** upwardly extending from the annular top coupling flange **445** and respectively engaged into respective pinholes **435** on the bottom side of the annular coupling flange **434** of the guide disk **43.** Fastening members, for example, screws may be fastened to the annular top coupling flange **445** of the rotary cap **44** and the annular coupling flange **434** of the guide disk **43** to affix the rotary cap **44** to the guide disk **43.** The rotary cap **44** further has a plurality of positioning ribs **444** of different sizes for selectively engaging into respective positioning grooves **413** around the annular bottom coupling flange **41** of the container **4,** and at least one outer thread **447** threaded into the at least one inner thread **24** of the base **2** such that the engagement portion **25** of the base **2** is forced into engagement with an engagement portion (toothed ring) **414** at the bottom side of the bottom coupling flange **41** of the container **4.** After engagement between the engagement portion **25** of the base **2** and the engagement portion (toothed ring) **414** of the container **4,** the container **4** is prohibited from rotation relative to the base **2** to adjust6 the gap between the grinding base **32** and the grinding disk **31.**

Referring to FIGS. 1~3 again, the container **4** has particle size indication marks **415.** By means of engagement between the at least one inner thread **24** and the at least one outer thread **447** and engagement between the positioning ribs **444** and the positioning grooves **413,** the container **4** is joined to the base **2,** and the gap between the grinding disk **31** and the grinding base **32** at this time is the maximum. At this time, the left particle size indication mark **415** is in alignment with the index **53** at the housing **5.** Further, in order to close the container **4,** a top cover **45** is covered on the top side of the container **4.**

The housing **5** houses the driving unit **1** and the base **2** to cause a sense of beauty. The housing **5** has a longitudinal positioning rib **51** protruded from its inside wall and engaged into a longitudinal positioning groove **27** on the outside wall of the base **2,** and a switch hole **52** cut through the periphery for receiving the control switch **15.** The index **53** is marked on the outside wall of the housing **5** right above the switch hole **52.**

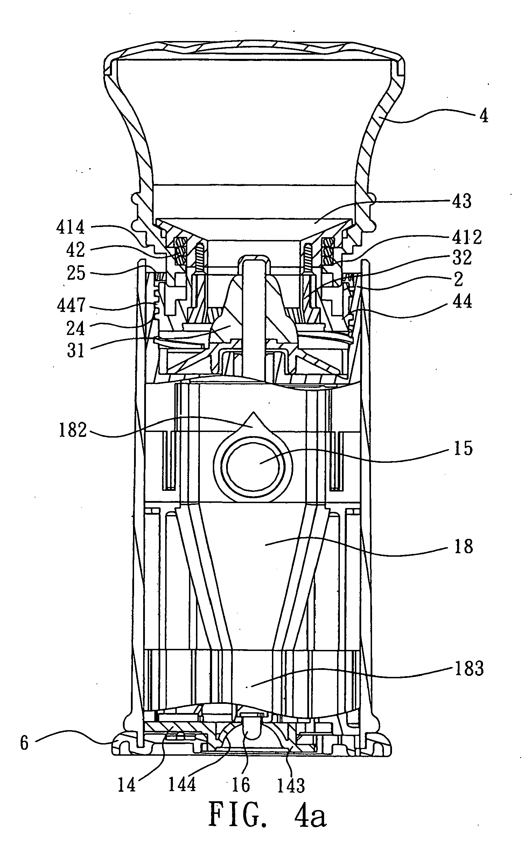

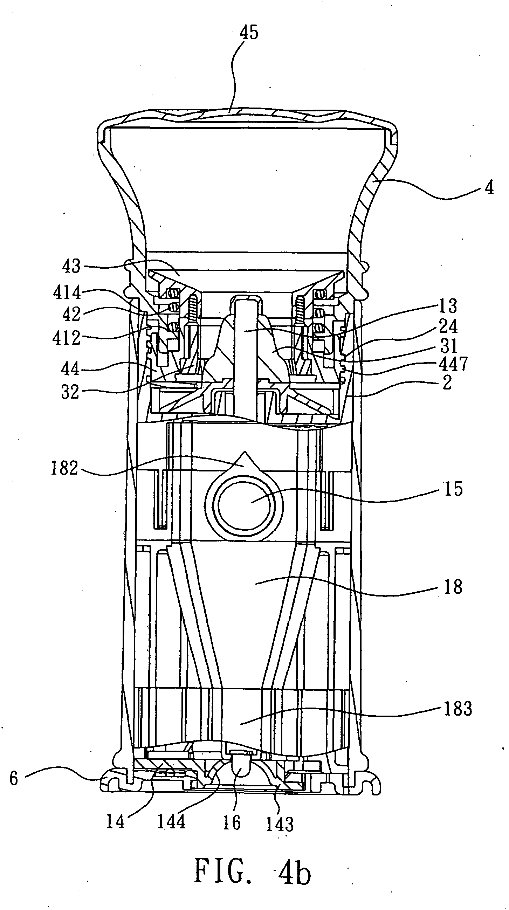

Referring to FIGS. 4a and 4b, when adjusting the particle size of the ground powder, lift the container **4** relative to the housing **5.** Because the rotary cap **44** is threaded into the base **2** and the guide disk **43** is joined to the rotary cap **44,** the engagement portion (toothed ring) **414** of the bottom coupling flange **41** of the container **4** is disengaged from the engagement portion **25** of the base **2** and the step **412** is forced to compress the elastic member **42** against the guide disk **43** when lifted the container **4** relative to the housing **5.** After disengagement of the engagement portion (toothed ring) **414** of the bottom coupling flange **41** of the container **4** from the engagement portion **25** of the base **2,** the user can then rotate the rotary cap **44** relative to the base **2** to move the selected particle size indication mark **415** into alignment with the index **53.** When the selected particle size indication mark **415** is in alignment with the index **53,** release the hand from the container **4** for enabling the elastic member **42** to return to its former shape and to force the container **4** into engagement with the engagement portion **25** of the base **2** again. Thus, the ground powder particle size adjustment is done. According to the prior art design, the grinding disk is a movable member when adjusting the ground powder particle size. According to the present invention, the grinding base **32** of the grinding device **3** is a movable when adjusting the ground powder particle size. The grinding base **32** is fixedly fastened to the rotary cap **44** and movable with the rotary cap **44** relative to the grinding disk **31** to adjust the gap between the grinding disk **31** and the grinding base **32.** After adjustment, the particle size of the ground powder is maintained at the desired level.

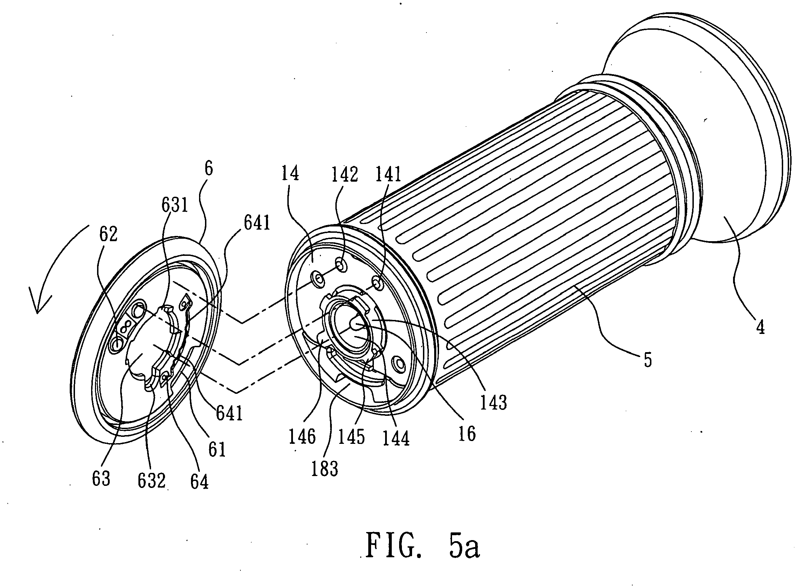

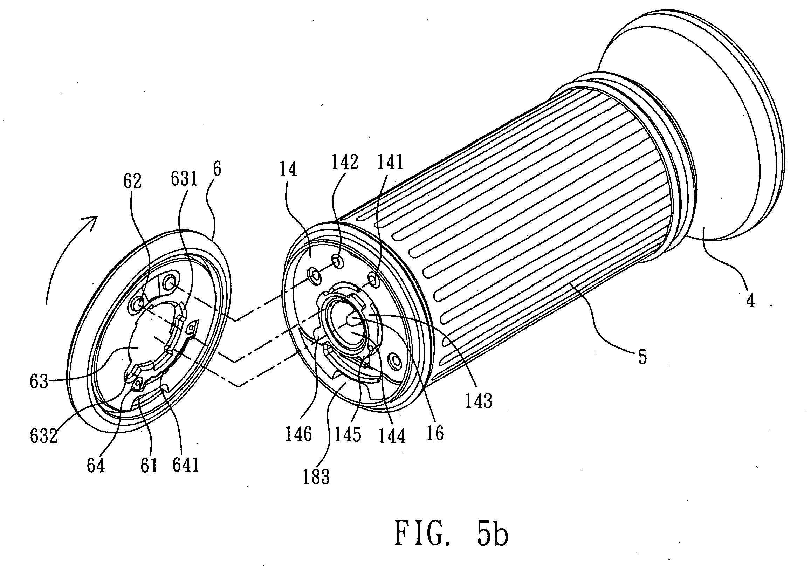

Referring to FIGS. 5a and 5b, the bottom cover **6** is coupled to the bottom side of the driving unit **1,** having a slot **61** corresponding to the discharge opening **183.** When the slot **61** is in alignment with the discharge opening **183,** the ground powder is discharged out of the discharge opening **183** and the slot **61.** The bottom cover **6** can be rotated relative to the driving unit **1** to close the discharge opening **183.** Further, the bottom cover **6** is provided with a metal connection plate 62. When the slot **61** is in alignment with the discharge opening **183,** the metal connection plate **62** contacts the positive pole contact **141** and the negative pole contact **142** to close the battery power circuit. At this time, the indicator light **151** is turned on to give off light, and the grinder is in standby status. When switching on the control switch **15** (pressing the control switch and holding it in the pressed condition), the indicator light **151** is turned off, the driving unit **1** is started to rotate the grinding disk **31** relative to the grinding base **32,** and at the same time the illumination light **16** is turned on to give off light for illumination.

Further, the battery lid **14** has at last one locating protrusion **145** and a long stop rod **146** respectively protruded from the periphery of the bottom hub **143.** The bottom cover **6** has a center hole **63,** at least one first notch **631** and a second notch **632** in communication with and spaced around the center hole **63,** a sector sliding groove **64** in communication with the center hole **63** at one side, and a spring strip **641** fixedly mounted in the sector sliding groove **64.** The spring strip **641** has multiple raised portions (not shown). After coupling of the bottom cover **6** to the bottom side of the driving unit **1,** the bottom cover **6** can be rotated on the bottom hub **143** of the battery lid **14** to move the raised portions of the spring strip **641** over the stop rod **146,** and therefore the user can sense the step of the rotation of the bottom cover **6** relative to the driving unit **1.** When the stop rod **146** is stopped at one end of the sector sliding groove **64,** the slot **61** is in alignment with the discharge opening **183,** and the metal connection plate **62** is kept in contact with the positive pole contact **141** and the negative pole contact **142** to close the battery power circuit. When the stop rod **146** is stopped at the other end of the sector sliding groove **64,** the stop rod **146** in alignment with the second notch **632** and the at last one locating protrusions **145** is in alignment with the at least one first notch **631,** and the user can then remove the bottom cover **6** from the driving unit **1** for replacement of the battery cells.

As stated above, the invention changes the myth of the prior art design in which the driving unit must be disposed at the top side of the container. By means of altering the arrangement between parts of the grinding device and setting the grinding device between the container and the base, the invention allows lifting of the container to disengage the bottom engagement portion of the container from the top engagement portion of the base and also allows rotation of the container relative to the base to change the gap between the grinding base and the grinding disk after disengagement of the container from the base, i.e., the invention allows easy adjustment of the ground powder particle size. The ground powder is guided out of the base and discharged out of the discharge trough of the driving unit. Further, the invention provides an illumination light and an indicator light for illumination during grinding and for operation status indication. Further, the grinder is provided with a bottom cover that prohibits external bodies from entering the driving unit. When the slot of the bottom cover is in alignment with the discharge opening of the discharge trough, the metal contact plate is kept in contact with the positive pole contact and the negative pole contact to close the power circuit and to turn on the indicator light, i.e., the grinder enters the standby mode.

Although a particular embodiment of the invention has been described in detail for purposes of illustration, various modifications and enhancements may be made without departing from the spirit and scope of the invention.

## Claims

1. A grinder comprising:
a spindle (13);
a hollow base (2) having a grinding chamber (22) for accommodating said spindle (13), a ground powder outlet (23) in communication with said grinding chamber (22), at least one inner thread (24) extending around the inner side of said grinding chamber (22), and a top engagement portion (25):
a grinding device (3), said grinding device (3) comprising a grinding disk (31) and a grinding base (32), said grinding disk (31) being affixed to said spindle (13) an suspending in said grinding chamber 22 and kept spaced from said grinding base (32) by a gap;
a container (4) mounted on a top of said hollow base (2), said container (4) comprising a bottom opening (411), an annular bottom coupling flange (41) extending around said bottom opening (411), an engagement portion (414) extending from said annular bottom coupling flange (41) for engaging the top engagement portion (25) of said hollow base (2) to prohibit rotation of said container (4) relative to said hollow base (2), a hollow guide disk (43) mounted therein and spaced above said bottom opening (411), an elastic member (42) supported between said annular bottom coupling flange (41) and said hollow guide disk (43), and a rotary cap (44) rotatably coupled to said annular bottom coupling flange (41) and fastened to said hollow guide disk (43), said rotary cap (44) having a bottom side fixedly connected to said grinding base (32) and at least one outer thread (447) threaded into the at least one inner thread (24) of said hollow base (2);
wherein when lifting said container (4) to disengage the engagement portion (414) of said annular bottom coupling flange (41) from the top engagement portion (25) of said hollow base (2), said elastic member (42) is compressed by said annular bottom coupling flange (41) against said hollow guide disk (43), and said rotary cap (44) is rotatable with said container (4) relative to said hollow base (2) to adjust the gap between said grinding base (32) and said grinding disk (31).

2. The grinder as claimed in claim 1, further comprising a -driving unit (1), said driving unit (1) amounted on a bottom of said hollow base (2), a bottom battery chamber (12) holding a set of battery cells in a bottom side of said driving unit (1), a battery lid (14) covering said battery chamber (12), a motor mounted in a top side thereof, and a speed reduction gear coupled between said motor and a bottom end of said spindle (13) and rotatable by said motor to rotate said spindle (13).

3. The grinder as claimed in claim 2, wherein said driving unit (1) comprises a shell (11), a control switch (15) outwardly protruding from the periphery of said shell (11) art one side, and an indicator light (151) mounted in said control switch (15), said driving unit (1) comprises a bottom hub (143), an illumination light (16) mounted in said bottom hub (143), and a reflector (144) mounted in said bottom hub (143) around said illumination light (16).

4. The grinder as claimed in claim 2, wherein said driving unit (1) comprises a shell (11), said shell (11) having two longitudinal ribs (181), a discharge trough (18) defined between said two longitudinal ribs (181) in communication with said ground powder outlet (23) of said hollow base (2), said discharge trough (18) having a width gradually reducing downwards and terminating in a discharge opening (183).

5. The grinder as claimed in claim 1, wherein the top engagement portion (25) of said hollow base (2) is a one-way toothed ring; the engagement portion (414) of said container (4) is a one-way toothed ring for engaging the one-way toothed ring of said hollow base (2).

6. The grinder as claimed in claim 1,
further comprising a conical distribution wheel (26) fixedly mounted on said spindle (13) and suspending in a bottom side of said grinding chamber (22) of said hollow base (2), said conical distribution wheel having a plurality of radial ribs (261).

7. The grinder as claimed in claim 1, wherein said container (4) has an inside annular step (412) extending around an inside wall of said annular bottom coupling flange (41): said hollow guide disk (43) has an annular bottom locating groove (431); said elastic member (42) has a bottom end supported on said inside annular step (412) of said container (4) and a top end engaged into the annular bottom locating groove (431) of said hollow guide disk (43).

8. The grinder as claimed in claim 1, wherein said hollow guide disk (43) has a top guide surface (432) curved inwards, a center opening (433) cut through the center of said top guide surface (432), an annular bottom locating groove (431) for holding said elastic member (42), an annular coupling flange (434) downwardly extending from a bottom side thereof between the center opening (433) and annular bottom locating groove (431) of said hollow guide disk (43) and coupled to said rotary cap (44): said rotary cap (44) has a bottom chamber (441), which receives said grinding base (32), and an annular top coupling flange (445) fastened to the annular coupling flange (434) of said guide disk (43) to constrain said elastic member (42) to the space between said hollow guide disk (43) and said container (4).

9. The grinder as claimed in claim 1, wherein said rotary cap (44) has an annular top coupling groove (443) coupled to the annular bottom coupling flange (41) of said container (4), and a plurality of positioning ribs (444) for selectively engaging into respective positioning grooves (413) around the annular bottom coupling flange (41) of said container (4).

10. The grinder as claimed in claim 1, further comprising a housing 5 surrounding said hollow base (2) and a driving unit (1), said housing (5) comprising a switch hole (52) for receiving a control switch (15) of said driving unit (1), an index (53) for aiming at one of a set of ground powder particle size indication marks (415) at said container (4).

11. The grinder as claimed in claim 2, further comprising a bottom cover (6) rotatably coupled to a bottom side of said driving unit (1), said bottom cover (6) having a slot (61) movable with said bottom cover (6) relative to said driving unit (1) to close/open the discharge opening (183), a metal contact plate (62), which is moved into contact with positive and negative metal contacts (141, 142) of said driving unit (1) to close a power circuit of said driving unit (1) when said slot (61) is in communication with said discharge opening (183).

12. The grinder as claimed in claim 11, wherein said driving unit (1) comprises a bottom hub (143), at last one locating protrusion (145) and a long stop rod (146) respectively protruded from the periphery of said bottom hub (143): said bottom cover (6) has a center hole (63) for receiving said bottom hub (143), at least one first notch (631) and a second notch (632) disposed in communication with and spaced around the center hole (63) of said bottom cover (6) corresponding to said at least one locating protrusion (145) and said stop rod (146), and a sector sliding groove (64) disposed in communication with the center hole (63) of said bottom cover (6) at one side and coupled to the long stop rod (146) of said driving unit (1); said bottom cover (6) is rotatable relative to said driving unit (1) between a first position where said long stop rod (146) of said driving unit (1) s stopped at one end of said sector sliding groove (64) and said slot (61) of said bottom cover (6) is in communication with said discharge opening (183), and a second position where the at least one first notch (631) and a second notch (632) of said bottom cover (6) are respectively in alignment with the at last one locating protrusion (145) and long stop rod (146) of said driving unit (1) for allowing removal of said bottom cover (6) from said driving unit (1).

13. The grinder as claimed in claim 12, wherein said bottom cover (6) further comprises a spring strip (641) fixedly mounted in said sector sliding groove (64), said spring strip (641) having a plurality of raised portions that are moved over the long stop rod (146) of said driving unit (1) when said bottom cover (6) is rotated relative to said driving unit (1).

## Patentansprüche

1. Mühle mit:
einer Spindel (13);
einem hohlen Grundkörper (2), der eine Mahlkammer (22) zur Aufnahme der Spindel (13), einen Auslass (23) für gemahlenes Pulver in Verbindung mit der Mahlkammer (22), mindestens ein entlang der Innenseite der Mahlkammer (22) verlaufendes Innengewinde (24) und einen oberen Eingriffsabschnitt (25) aufweist;
einem Mahlwerk (3) mit einer Mahlscheibe (31) und einem Mahlgrundkörper (32), wobei die Mahlscheibe (31) an die Spindel (13) angebracht und in der Mahlkammer (22) aufgehängt ist und durch einen Spalt von dem Mahlgrundkörper (32) Abstand hält;
einem Behälter (4), der oben auf dem hohlen Grundkörper (2) montiert ist, wobei der Behälter (4) enthält: eine untere Öffnung (411), einen darum herum verlaufenden unteren ringförmigen Kupplungsflansch (41), einen von dem unteren ringförmigen Kupplungsflansch (41) ausgehenden Eingriffsabschnitt (414) zum Eingreifen des oberen Eingriffsabschnitts (25) des hohlen Grundkörpers (2), um eine Drehung des Behälters (4) bezüglich des hohlen Grundkörpers (2) zu verhindern, eine darin montierte hohle Führungsscheibe (43), die über der unteren Öffnung (411) angebracht ist, ein elastisches Teil (42), das zwischen dem unteren ringförmigen Kupplungsflansch (41) und der hohlen Führungsscheibe (43) gehalten ist, und eine drehbar mit dem unteren ringförmigen Kupplungsflansch (41) gekoppelten Drehkappe (44), die an der hohlen Führungsscheibe (43) befestigt ist, wobei die Drehkappe (44) eine fest mit dem Mahlgrundkörper (32) verbundene Unterseite und mindestens ein Außengewinde (447) aufweist, das in das mindestens eine Innengewinde (24) des hohlen Grundkörpers eingefädelt ist;
wobei beim Anheben des Behälters (4) zum Lösen des Eingriffsabschnitts (414) des unteren ringförmigen Kupplungsflansches (41) von dem oberen Eingriffsabschnitt (25) des hohlen Grundkörpers (2) das elastische Teil (42) durch den unteren ringförmigen Kupplungsflansch (41) gegen die hohle Führungsscheibe (43) gedrückt wird, und die Drehkappe (44) mit dem Behälter (4) bezüglich des hohlen Grundkörpers (2) drehbar ist, um den Spalt zwischen dem Mahlgrundkörper (32) und der Mahlscheibe (31) zu verstellen.

2. Mühle nach Anspruch 1, ferner mit einer Antriebseinheit (1), die unten an den hohlen Grundkörper (2) montiert ist, einer einen Satz von Batteriezellen an einer Unterseite der Antriebseinheit (1) haltenden unteren Batteriekammer (12), einem die Batteriekammer (12) abdeckenden Batteriedeckel (14), einem an dessen Oberseite montierten Motor, und einem zwischen dem Motor und der Unterseite der Spindel (13) gekoppelten Untersetzungsgetriebe, das durch den Motor drehbar ist, um die Spindel (13) zu drehen.

3. Mühle nach Anspruch 2, wobei die Antriebseinheit (1) eine Hülse (11), einen von dem Rand der Hülse (11) an einer Seite nach außen vorstehenden Steuerschalter (15), ein in dem Steuerschalter (15) montiertes Anzeigelicht (151), eine Bodennabe (143), ein in der Bodennabe (143) montiertes Beleuchtungslicht (16) und einen in der Bodennabe (143) um das Beleuchtungslicht (16) herum montierten Reflektor (144) enthält.

4. Mühle nach Anspruch 2, wobei die Antriebseinheit (1) eine zwei Längsrippen (181) aufweisende Hülse (11) und eine zwischen den beiden Längsrippen (181) definierte Auslassrinne (18) enthält, die mit dem Auslass (23) für gemahlenes Pulver des hohlen Grundkörpers (2) in Verbindung steht, wobei die Auslassrinne eine nach unten allmählich abnehmende Breite aufweist und in einer Auslassöffnung (183) endet.

5. Mühle nach Anspruch 1, wobei der obere Eingriffsabschnitt (25) des hohlen Grundkörpers (2) ein Einwegzahnkranz und der Eingriffsabschnitt (414) des Behälters (4) ein Einwegzahnkranz zum Eingreifen in den Einwegzahnkranz des hohlen Grundkörpers (2) ist.

6. Mühle nach Anspruch 1, ferner mit einem an die Spindel (13) fest montierten konischen Verteilrad (26), das an einer Unterseite der Mahlkammer (22) des hohlen Grundkörpers (2) aufgehängt ist und mehrere Radialrippen (261) aufweist.

7. Mühle nach Anspruch 1, wobei der Behälter (4) eine innere ringförmige Stufe (412) aufweist, die um eine Innenwand des unteren ringförmigen Kupplungsflansches (41) herum verläuft; die hohle Führungsscheibe (43) eine untere ringförmige Aufnahmenut (431) aufweist; und das elastische Teil (42) ein auf die innere ringförmige Stufe (412) des Behälters (4) gestütztes unteres Ende und ein in die untere ringförmige Aufnahmenut (431) der hohlen Führungsscheibe (43) eingreifendes oberes Ende aufweist.

8. Mühle nach Anspruch 1, wobei die hohle Führungsscheibe (43) eine nach innen gekrümmte obere Führungsfläche (432), eine durch die Mitte der oberen Führungsfläche (432) geschnittene Mittelöffnung (433), eine untere ringförmige Aufnahmenut (431) zum Halten des elastischen Teils (42) und einen ringförmigen Kupplungsflansch (434) aufweist, der von dessen Unterseite zwischen der Mittelöffnung (433) und der ringförmigen Aufnahmenut (431) an der Unterseite der hohlen Führungsscheibe (43) nach unten verläuft und mit der Drehkappe (44) gekoppelt ist; und wobei die Drehkappe eine den Mahlgrundkörper (32) aufnehmende Unterkammer (441) und einen ringförmigen oberen Kupplungsflansch (445) aufweist, der mit dem ringförmigen Kupplungsflansch (434) der Führungsscheibe (43) verbunden ist, um das elastische Teil (42) in dem Raum zwischen der hohlen Führungsscheibe (43) und dem Behälter (4) zu halten.

9. Mühle nach Anspruch 1, wobei die Drehkappe (44) eine mit dem unteren ringförmigen Kupplungsflansch (41) des Behälters (4) gekoppelte obere ringförmige Kupplungsnut (443) und mehrere Positionierrippen (444) aufweist, um wahlweise in jeweilige Positioniernuten (413) um den unteren ringförmigen Kupplungsflansch (41) des Behälters (4) herum einzugreifen.

10. Mühle nach Anspruch 1, ferner mit einem den hohlen Grundkörper (2) und eine Antriebseinheit (1) umgebenden Gehäuse (5), das ein Schalterloch (52) zur Aufnahme eines Steuerschalters (15) der Antriebseinheit (1) und eine Markierung (53) zum Ausrichten auf eine von einem Satz von die Teilchengröße des gemahlenen Pulvers angebenden Markierungen (415) an dem Behälter (4) enthält.

11. Mühle nach Anspruch 2, ferner mit einer Bondenabdeckung (6), die mit der Unterseite der Antriebseinheit (1) drehbar gekoppelt ist, wobei die Bodenabdeckung (6) einen mit ihr bezüglich der Antriebseinheit (1) bewegbaren Schlitz (61) aufweist, um die Auslassöffnung (183) zu öffnen/zu schließen, und einer Metallkontaktplatte (62), die mit positiven und negativen Metallkontakten (141, 142) der Antriebseinheit (1) in Kontakt gebracht ist, um einen Stromkreis der Antriebseinheit (1) zu schließen, wenn der Schlitz (61) in Verbindung mit der Auslassöffnung (183) ist.

12. Mühle nach Anspruch 11, wobei die Antriebseinheit (1) eine Bodennabe (143), mindestens einen Feststellvorsprung (145) und einen langen Stoppstift (146), die von dem Rand der Bodennabe (143) entsprechend vorstehen, enthält; wobei die Bodenabdeckung (6) ein Mittelloch (63) zur Aufnahme der Bodennabe (143), mindestens eine erste Kerbe (631) und eine zweite Kerbe (632), die entsprechend dem mindestens einen Feststellvorsprung (145) und dem Stoppstift (146) in Verbindung mit und mit Abstand um das Mittelloch (63) der Bodenabdeckung (6) herum angeordnet sind, und eine in Verbindung mit dem Mittelloch (63) der Bodenabdeckung (6) an einer Seite in Verbindung angeordnete Sektorschiebenut (64), die mit dem langen Stoppstift (146) der Antriebseinheit (1) gekoppelt ist, aufweist; wobei die Bodenabdeckung (6) relativ zu der Antriebseinheit (1) zwischen einer ersten Position, in der der lange Stoppstift (146) der Antriebseinheit (1) an einem Ende der Sektorschiebenut (64) gestoppt und der Schlitz (61) der Bodenabdeckung (6) in Verbindung mit der Auslassöffnung (183) ist, und einer zweiten Position, in der die mindestens eine erste Kerbe (631) und eine zweite Kerbe (632) der Bodenabdeckung (6) jeweils mit dem mindestens einen Feststellvorsprung (145) und dem langen Stoppstift (146) der Antriebseinheit (1) fluchten, drehbar ist, um ein Entfernen der Bodenabdeckung (6) von der Antriebseinheit (1) zu ermöglichen.

13. Mühle nach Anspruch 12, wobei die Bodenabdeckung (6) ferner einen in der Sektorschiebenut (64) fest montierten Federstreifen (641) enthält, der mehrere Erhebungen aufweist, die über den langen Stoppstift (146) der Antriebseinheit (1) bewegt werden, wenn die Bodenabdeckung (6) relativ zu der Antriebseinheit (1) gedreht wird.

## Revendications

1. Broyeur comprenant:
- un mandrin (13) ;
- une base creuse (2) ayant une chambre de broyage (22) pour recevoir ledit mandrin (13), une sortie de poudre broyée (23) en communication avec ladite chambre de broyage (22), au moins un filet interne (24) s'étendant autour du côté interne de ladite chambre de broyage (22), et une partie d'engagement supérieure (25) ;
- un dispositif de broyage (3), ledit dispositif de broyage (3) comprenant un disque de broyage (31) et une base de broyage (32), ledit disque de broyage (31) étant fixé audit mandrin (13) et suspendu dans ladite chambre de broyage (22) et maintenu espacé de ladite base de broyage (32) par un espace ;
- un contenant (4) monté sur une partie supérieure de ladite base creuse (2), ledit contenant (4) comprenant une ouverture inférieure (411), un rebord d'accouplement inférieur annulaire (41) s'étendant autour de ladite ouverture inférieure (411), une partie d'engagement (414) s'étendant à partir dudit rebord d'accouplement inférieur annulaire (41) pour engager la partie d'engagement supérieure (25) de ladite base creuse (2) pour empêcher la rotation dudit contenant (4) par rapport à ladite base creuse (2), un disque de guidage creux (43) monté dans celui-ci et espacé au-dessus de ladite ouverture inférieure (411), un élément élastique (42) supporté entre ledit rebord d'accouplement inférieur annulaire (41) et ledit disque de guidage creux (43), et un couvercle rotatif (44) couplé à rotation audit rebord d'accouplement inférieur annulaire (41) et fixé audit disque de guidage creux (43), ledit couvercle rotatif (44) ayant un côté inférieur relié de manière fixe à ladite base de broyage (32) et au moins un filet externe (447) fileté dans le au moins un filet interne (24) de ladite base creuse (2) ;
- dans lequel, lors de l'élévation dudit contenant (4) pour désengager la partie d'engagement (414) dudit rebord d'accouplement inférieur annulaire (41) à partir de la partie d'engagement supérieure (25) de ladite base creuse (2), ledit élément élastique (42) est comprimé par ledit rebord d'accouplement inférieur annulaire (41) contre ledit disque de guidage creux (43) et ledit couvercle rotatif (44) peut tourner avec ledit contenant (4) par rapport à ladite base creuse (2) pour ajuster l'espace entre ladite base de broyage (32) et ledit disque de broyage (31).

2. Broyeur selon la revendication 1, comprenant en outre une unité d'entraînement (1), ladite unité d'entraînement (1) étant montée sur une partie inférieure de ladite base creuse (2), une chambre de batterie inférieure (12) contenant un ensemble d'éléments de batterie dans un côté inférieur de ladite unité d'entraînement (1), un couvercle de batterie (14) recouvrant ladite chambre de batterie (12), un moteur monté dans un côté supérieur de celle-ci et un démultiplicateur de vitesse couplé entre ledit moteur et une extrémité inférieure dudit mandrin (13) et pouvant tourner au moyen dudit moteur pour faire tourner ledit mandrin (13).

3. Broyeur selon la revendication 2, dans lequel ladite unité d'entraînement (1) comprend une coque (11), un commutateur de commande (15) faisant saillie vers l'extérieur à partir de la périphérie de ladite coque (11) sur un côté, et un voyant (151) monté dans ledit commutateur de commande (15), ladite unité d'entraînement (1) comprenant un moyeu inférieur (143), une lumière d'éclairage (16) montée dans ledit moyeu inférieur (143), et un réflecteur (144) monté dans ledit moyeu inférieur (143) autour de ladite lumière d'éclairage (16).

4. Broyeur selon la revendication 2, dans lequel ladite unité d'entraînement (1) comprend une coque (11), ladite coque (11) ayant deux nervures longitudinales (181), une goulotte de décharge (18) définie entre lesdites deux nervures longitudinales (181) en communication avec ladite sortie de poudre broyée (23) de ladite base creuse (2), ladite goulotte de décharge (18) ayant une largeur diminuant progressivement vers le bas et se terminant en une ouverture de décharge (183).

5. Broyeur selon la revendication 1, dans lequel la partie d'engagement supérieure (25) de ladite base creuse (2) est une couronne dentée unidirectionnelle ; la partie d'engagement (414) dudit contenant (4) est une couronne dentée unidirectionnelle destinée à s'engager avec la couronne dentée unidirectionnelle de ladite base creuse (2).

6. Broyeur selon la revendication 1, comprenant en outre une roue de distribution conique (26) montée de manière fixe sur ledit mandrin (13) et suspendue dans un côté inférieur de ladite chambre de broyage (22) de ladite base creuse (2), ladite roue de distribution conique ayant une pluralité de nervures radiales (261).

7. Broyeur selon la revendication 1, dans lequel ledit contenant (4) a un épaulement annulaire intérieur (412) s'étendant autour d'une paroi intérieure dudit rebord d'accouplement inférieur annulaire (41) ; ledit disque de guidage creux (43) a une rainure de localisation inférieure annulaire (431) ; ledit élément élastique (42) a une extrémité inférieure supportée sur ledit épaulement annulaire intérieur (412) dudit contenant (4) et une extrémité supérieure engagée dans la rainure de localisation inférieure annulaire (431) dudit disque de guidage creux (43).

8. Broyeur selon la revendication 1, dans lequel ledit disque de guidage creux (43) a une surface de guidage supérieure (432) incurvée vers l'intérieur, une ouverture centrale (433) découpée à travers le centre de ladite surface de guidage supérieure (432), une rainure de localisation inférieure annulaire (431) pour contenir ledit élément élastique (42), un rebord d'accouplement annulaire (434) s'étendant vers le bas à partir d'un côté inférieur de celle-ci entre l'ouverture centrale (433) et la rainure de localisation inférieure annulaire (431) dudit disque de guidage creux (43) et couplé audit couvercle rotatif (44) ; ledit couvercle rotatif (44) a une chambre inférieure (441), qui reçoit ladite base de broyage (32), et un rebord d'accouplement supérieur annulaire (445) fixée au rebord d'accouplement annulaire (434) dudit disque de guidage (43) pour contraindre ledit élément élastique (42) dans l'espace entre ledit disque de guidage creux (43) et ledit contenant (4).

9. Broyeur selon la revendication 1, dans lequel ledit couvercle rotatif (44) a une rainure d'accouplement supérieure annulaire (444) couplée au rebord d'accouplement inférieur annulaire (41) dudit contenant (4), et une pluralité de nervures de positionnement (444) destinées à s'engager sélectivement avec les rainures de positionnement respectives (413) autour du rebord d'accouplement inférieur annulaire (41) dudit contenant (4).

10. Broyeur selon la revendication 1, comprenant en outre un boîtier (5) entourant ladite base creuse (2) et une unité d'entraînement (1), ledit boîtier (5) comprenant un trou de commutateur (52) pour recevoir un commutateur de commande (15) de ladite unité d'entraînement (1), un index (53) pour viser l'un parmi un ensemble de repères d'indication de dimension de particule de poudre broyée (415) au niveau dudit contenant (4).

11. Broyeur selon la revendication 2, comprenant en outre un couvercle inférieur (6) couplé à rotation à un côté inférieur de ladite unité d'entraînement (1), ledit couvercle inférieur (6) ayant une fente (61) déplaçable avec ledit couvercle inférieur (6) par rapport à ladite unité d'entraînement (1) pour fermer/ouvrir l'ouverture de décharge (183), une plaque de contact métallique (62), qui est déplacée pour venir en contact avec les contacts métalliques positif et négatif (141, 142) de ladite unité d'entraînement (1) pour fermer un circuit d'alimentation de ladite unité d'entraînement (1) lorsque ladite fente (61) est en communication avec ladite ouverture de décharge (183).

12. Broyeur selon la revendication 11, dans lequel ladite unité d'entraînement (1) comprend un moyeu inférieur (143), au moins une saillie de localisation (145) et une longue tige de butée (143) faisant saillie respectivement à partir de la périphérie dudit moyeu inférieur (143) ; ledit couvercle inférieur (6) a un trou central (63) pour recevoir ledit moyeu inférieur (143), au moins une première encoche (631) et une seconde encoche (632) disposées en communication avec et espacées autour du trou central (63) dudit couvercle inférieur (6) correspondant à ladite au moins une saillie de localisation (145) et à ladite tige de butée (146), et une rainure de coulissement de secteur (64) disposée en communication avec le trou central (63) dudit couvercle inférieur (6) sur un côté et couplée à la longue tige de butée (146) de ladite unité d'entraînement (1) ; ledit couvercle inférieur (6) est apte à tourner par rapport à ladite unité d'entraînement (1) entre une première position dans laquelle ladite longue tige de butée (146) de ladite unité d'entraînement (1) est arrêtée à une extrémité de ladite rainure de coulissement de secteur (64) et ladite fente (61) dudit couvercle inférieur (6) est en communication avec ladite ouverture de décharge (183), et une seconde position dans laquelle la au moins une première encoche (631) et une seconde encoche (632) dudit couvercle inférieur (6) sont alignées avec respectivement la au moins une saillie de localisation (145) et la longue tige de butée (146) de ladite unité d'entraînement (1) pour permettre le retrait dudit couvercle inférieur (6) à partir de ladite unité d'entraînement (1).

13. Broyeur selon la revendication 12, dans lequel ledit couvercle inférieur (6) comprend en outre un ressort à lamelles (641) monté de manière fixe dans ladite rainure de coulissement de secteur (64), ledit ressort à lamelles (641) ayant une pluralité de parties surélevées qui sont amenées à se déplacer sur la longue tige de butée (146) de ladite unité d'entraînement (1) lorsque ledit couvercle inférieur (6) est amené à tourner par rapport à ladite unité d'entraînement (1).
